# EUROPEAN PATENT SPECIFICATION

(11) **EP 3 337 748 B1**
(45) Date of publication and mention of the grant of the patent: **01.04.2020**
(21) Application number: 15790657.9
(22) Date of filing: 21.08.2015
(51) Int. Cl.: B66B 11/02

(54) **STRUCTURAL MEMBER FOR ELEVATOR**
STRUKTURELEMENT FÜR AUFZUG
ÉLÉMENT STRUCTUREL POUR ASCENSEUR

(43) Date of publication of application: 27.06.2018
(73) Proprietor: Otis Elevator Company, Farmington CT 06032 (US)
(72) Inventor: COLDRE, Laurent, F-45500 Gien (FR)
(74) Representative: Dehns
(86) International application number: PCT/IB2015/001896
(87) International publication number: WO 2017/033038

(56) References cited:
- EP-A1- 1 801 063
- WO-A1-2012/007974
- FR-A1- 2 721 074
- JP-A- 2013 010 597
- JP-U- S5 023 129
- JP-U- S56 173 581
- JP-U- S59 156 069

## Description

### BACKGROUND

The subject matter disclosed herein generally relates to elevators and, more particularly, to structural members for elevators and construction of elevators.

In elevator systems, passengers ride in an elevator car comprising a cabin which is housed within a frame to which the elevator car lifting equipment is attached. Many elevator cabins are formed having a rigid, sturdy frame to which decorative panels (functioning as walls) are attached in order to provide a passenger enclosure. Handrails may be attached to and through the decorative panels. The cabin rigidity is primarily a function of the rigidity of the frame. Cabins having this construction may be heavy due to a heavy rigid frame and additional panels. A heavy cabin may result in larger and/or more powerful elevator components, most significantly a more powerful elevator drive system may be needed to be used. Powerful drive systems may require additional space in the building (e.g., above an elevator shaft) to accommodate the larger components.

One solution to reduce weight is to reduce the weight of the panels, such as by using thin sheet metal. During construction a frame may be manufactured or formed and the thin panels may then be attached to the frame to form the cabin interior, and handrails may be attached. However, such thin-sheet panels may provide less than desirable aesthetics to passengers, may easily deform when stress is applied to the cabin walls, and may result in less than desirable acoustics. By achieving a reduction in the cabin weight, it becomes possible to reduce excess mass in the system by reducing both the number of ropes in the system and the counterweight mass, and thereby provide a lower cost, energy efficient elevator. However, as noted, such sheet panels may be insufficient for various reasons including aesthetics and the fact that a relatively heavy frame may be required to provide rigidity to the cabin.

EP1801063A describes a method of constructing an elevator cab in which a platform and a ceiling include U-shaped brackets that receive wall panels.

FR2721074A1 describes a locking unit for assembling panels of an elevator cab. JP2013-010597A describes a handrail mounting apparatus for an elevator. JPS56173581U, JPS59156069U and JPS5023129U also disclose relevant structural members.

### SUMMARY

According to one embodiment, a structural member for an elevator cabin is provided according to claim 1.

In addition to one or more of the features described above, or as an alternative, further embodiments may include at least one engagement feature within the at least one support channel, the at least one engagement feature configured to engage with a wall panel of the elevator cabin wall.

In addition to one or more of the features described above, or as an alternative, further embodiments may include that the at least one engagement feature is configured to engage with the wall panel by an interference fit.

In addition to one or more of the features described above, or as an alternative, further embodiments may include that the second portion is configured to fixedly attach to a frame of the elevator cabin.

In addition to one or more of the features described above, or as an alternative, further embodiments may include that the first portion defines a cavity therein.

In addition to one or more of the features described above, or as an alternative, further embodiments may include that an external contour of the first portion defines a groove.

In addition to one or more of the features described above, or as an alternative, further embodiments may include that the first portion, the second portion, and the intermediate portion form a unitary body.

According to another embodiment, an elevator cabin is provided. The cabin includes a frame and the structural member as described above. The structural member is fixedly attached to a portion of the frame.

In addition to one or more of the features described above, or as an alternative, further embodiments of the cabin may include a first wall panel and a second wall panel, each wall panel engaged with the structural member.

According to another embodiment, a method of constructing an elevator cabin is provided according to claim 10.

In addition to one or more of the features described above, or as an alternative, further embodiments of the method may include that the first portion defines a cavity therein, the method comprising installing at least one wire within the cavity of the first portion.

In addition to one or more of the features described above, or as an alternative, further embodiments of the method may include that the first portion defines a channel, the method comprising installing at least one light within the channel of the first portion.

In addition to one or more of the features described above, or as an alternative, further embodiments of the method may include that installing the at least one wall panel comprises installing a first panel on first side of the structural member and installing a second panel on a side opposite the first side.

Technical effects of embodiments of the present disclosure include a structural member for an elevator cabin that operates as a handrail and also supplies rigidity to the cabin without the need for a frame and panel system. Further technical effects of embodiments include a structural member configured to support sub-panels, lighting, and/or mirrors. Further technical effects include a structural member that is connected directly to and is part of the frame system of an elevator cabin.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The subject matter is particularly pointed out and distinctly claimed at the conclusion of the specification. The foregoing and other features, and advantages of the present disclosure are apparent from the following detailed description taken in conjunction with the accompanying drawings in which:
FIG. 1 is an exploded schematic illustration of a frame of an elevator cabin;
FIG. 2A is a perspective schematic view of a cabin wall in accordance with an embodiment of the present disclosure;
FIG. 2B is a side-end view schematic of the cabin wall of FIG. 2A;
FIG. 2C is a side-end view schematic of a structural member as used in the cabin wall of FIG. 2A; and
FIG. 3 is a process of constructing an elevator cabin in accordance with an embodiment of the present disclosure.

### DETAILED DESCRIPTION

As shown and described herein, various features of the disclosure will be presented. Various embodiments may have the same or similar features and thus the same or similar features may be labeled with the same reference numeral, but preceded by a different first number indicating the figure to which the feature is shown. Thus, for example, element "a" that is shown in FIG. X may be labeled "Xa" and a similar feature in FIG. Z may be labeled "Za." Although similar reference numbers may be used in a generic sense, various embodiments will be described and various features may include changes, alterations, modifications, etc. as will be appreciated by those of skill in the art, whether explicitly described or otherwise would be appreciated by those of skill in the art.

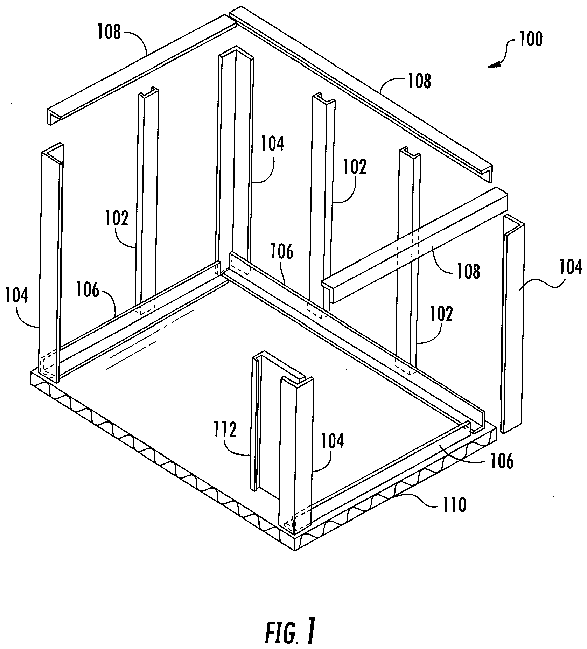

Referring to FIG. 1, an exploded schematic illustration of a frame of an elevator cabin is shown. An elevator cabin frame 100 is constructed from a plurality of interconnected frame sections or supports 102, 104, 106, 108 which provide a basic skeleton or frame for the cabin. In the example embodiment of FIG. 1, wall supports 102 are C-shaped or channeled and spaced between corner supports 104, which are L-shaped. The wall supports 102 and the corner supports 104 are configured to be vertical supports. The wall supports 102 and the corner supports 104 are attached to L-shaped horizontal floor supports 106 and L-shaped horizontal ceiling supports 108. The floor supports 106 may be attached to a floor section 110 and the ceiling supports 108 may be attached to a ceiling section (not shown). Attachment between the supports 102, 104, 106, 108 and/or between a support 102, 104, 106, 108 and the floor section 110 or the ceiling section may be by means of bolting, riveting, welding, or other fastening or attachment means or mechanism.

Additional vertical entrance supports 112 may be configured to define an entranceway to the elevator cabin 100. The entrance supports 112 may be C-shaped and may be configured to support, in part, an elevator door mechanism. As will be appreciated by those of skill in the art, certain horizontal and vertical supports are not shown in the drawing so that other parts of the cabin frame may be illustrated.

In some elevator cabin constructions, the frame 100 will be connected and formed. Subsequently, cabin wall panels may be affixed to the supports of the frame. A handrail or other features may then be affixed to the wall panels and/or may be affixed through the wall panels to the frame. Those of skill in the art will appreciate that the supports and other features of the frame 100 of FIG. 1 are merely provided as an example of an elevator cabin frame and frames of elevator cabins may take different configurations and/or the parts thereof (e.g., the configurations of the supports) may vary without departing from the scope of the present disclosure.

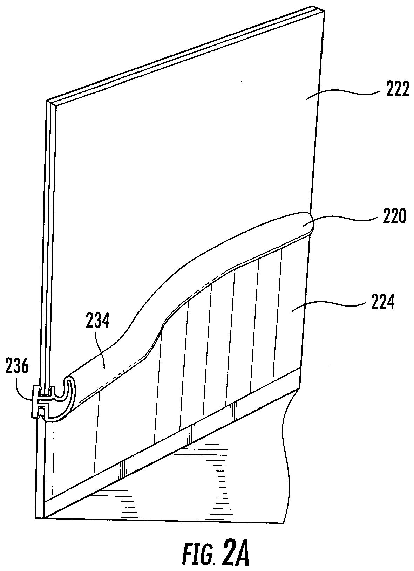

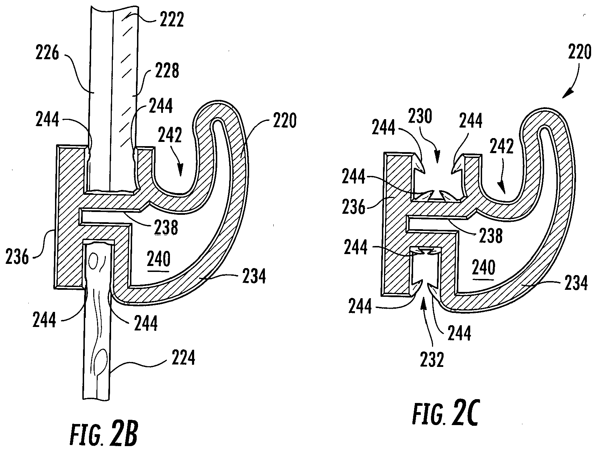

Turning now to FIGS. 2A-2C, a non-limiting embodiment of a structural member and wall panels in accordance with an embodiment of the present disclosure is shown. FIG. 2A shows an isometric schematic view of a structural member 220 supporting a first wall panel 222 and a second wall panel 224. FIG. 2B shows a side-end schematic view of the structural member 220 and the first wall panel 222 and the second wall panel 224 in greater detail. FIG. 2C shows a side-end schematic view of the structural member 220 without the first wall panel 222 and the second wall panel 224 connected thereto.

As shown, the structural member 220 is disposed between the first wall panel 222 and the second wall panel 224. The structural member 220 is configured as a handrail and may be affixed to one or more supports of the frame of the elevator cabin, e.g., supports 102, 104 of FIG. 1.

The structural member 220 may be a body formed by extrusion, additive manufacturing, molding, injection molding, or other process. As such, the structural member 220, in some embodiments, may be able to form any desired shape, size, geometry, or configuration. In some embodiments, the structural member 220 may be formed of aluminum, plastics, polymers, etc. and, in some embodiments, may be formed of a fire resistant material. Further, in some embodiments, the structural member 220 may be formed from multiple and/or different materials and/or may include a coating, e.g., a fire resistance coating, on some or all surfaces of the structural member 220.

As shown in FIGS. 2A and 2B, the first wall panel 222, shown vertically above the structural member 220, may have a different configuration than the second wall panel 224, shown vertically below the structural member 220. For example, in a non-limiting embodiment, the first wall panel 222 may be formed of multiple sheets, materials, and/or components and the second wall panel 224 may be a single sheet, material, and/or component. As shown in greater detail in FIG. 2B, the first wall panel 222 may have a first sheet 226 and a second sheet 228. The first sheet 226 may be a metal support or base layer for the first wall panel 222. Attached to the first sheet 226 is the second sheet 228, which in some embodiments may be a mirror or other material. Together, the first sheet 226 and the second sheet 228 form the first wall panel 222. The first wall panel 222 may be supported within and/or by the structural member 220 in a first support channel 230 (see FIG. 2C). The second wall panel 224 may be a single sheet or material, for example a wood panel, and may be supported within and/or by the structural member 220 in a second support channel 232 (see FIG. 2C). Those of skill in the art will appreciate that the first wall panel 222 and/or the second wall panel 224 may take any form and may be formed from one or more panels, depending on the desired construction.

To support the first wall panel 222 and the second wall panel 224, the body of the structural member 220 includes a first portion 234, a second portion 236, and an intermediate portion 238 disposed between and connecting the first portion 234 to the second portion 236. The first support channel 230 and the second support channel 232 are formed between the first portion 234 and the second portion 236, above and below the intermediate portion, respectively. In some non-limiting embodiments, the first portion 234, the second portion 236, and the intermediate portion 238 may be integrally formed and form a single unitary body. In other non-limiting embodiments, the first portion 234, the second portion 236, and/or the intermediate portion 238 may be formed from separate components that are connected or attached together such as by welding, fasteners, snap-fit or other attachment mechanisms.

The first portion 234 of the structural member 220 may be formed as a handrail, as depicted, or may have other structure or form. For example, in some non-limiting embodiments the first portion and the second portion may form an ergonomic handrail. In other non-limiting embodiments the first portion may be substantially similar to the second portion, such that a relatively flat or smooth surface is formed.

The first portion 234, as shown, and in some embodiments, may be a hollow structure with a cavity 240 defined within the first portion 234. The cavity 240 may be configured to accommodate electrical wiring therein such that the structural member 220 may function as a conduit for cables, wires, etc. An external contour or surface of the first portion may define a groove 242. The groove 242 may be configured as an ergonomic feature that may be comfortable to a passenger to use the first portion 234 as a handrail. Further, the groove 242 may be configured to accommodate and/or support lighting features within the structural member 220. For example, one or more LED lights may be placed in the groove 242 and/or attached to the first portion 234 within the groove 242. Wiring for the lights may be passed through the cavity 240.

The second portion 236 may be configured to attach, fix, or otherwise connect to one or more frame elements (e.g., the frame supports shown and described in FIG. 1). The second portion 236 thus may include features to enable the fixation to the frame, such as holes, threaded holes, clips, pegs, etc. that may connect with associated elements in the frame supports. As shown in FIGS. 2A and 2B, the second portion 236 may be positioned on the exterior of the wall panel such that the second portion 236 may be affixed to the support elements of the frame. As such, in some non-limiting embodiments, the structural member 220 may extend between an interior of an elevator cabin and an exterior of the elevator cabin.

As noted, between the first portion 234 and the second portion 236 are the intermediate portion 238, the first support channel 230, and the second support channel 232. Located on the walls or surfaces of the structural member 220 that define the first support channel 230 and the second support channel 232 may be one or more engagement features 244. The engagement features 244 may be configured to engage with the respective first wall panel 222 and second wall panel 224. In some non-limiting embodiments, the engagement features 244 may be elastomeric lips or protrusions configured to form an interference fit and securely attach the first wall panel 222 within the first support channel 230 and the second wall panel 224 within the second support channel 232. In some embodiments, the engagement features 244 may be configured to enable various thicknesses in the wall panels. For example, the engagement features may be configured such that they may receive or engage with panels of differing and/or varying thicknesses, without the need to have structural members with different support channel widths. Furthermore, in addition to providing support and rigidity to the wall panels and the cabin walls, in accordance with some embodiments, the engagement features may provide dampening characteristics to the wall panels during vibra-acoustic events. Further, for example, the engagement features may be configured and designed, both in material and/or shape, such that they may reduce and/or dampen specific, predetermined vibra-acoustic frequencies. Additionally, in accordance with some embodiments, the engagement features may be coated or have an exterior layer that is configured to assist in assembly of engaging the wall panels with the engagement features. For example, in some non-limiting embodiments, the engagement features may be coated with a thin, reticulated polyethylene layer and/or other lubricants to enable easy assembly and engagement with the wall panels.

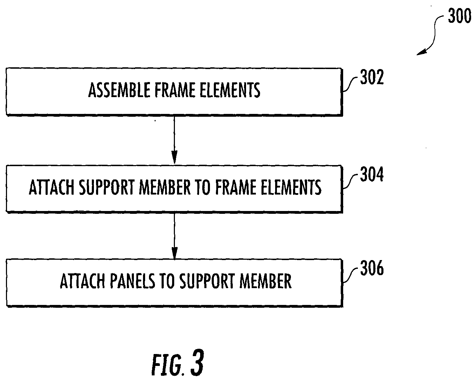

Turning now to FIG. 3, a flow process of constructing an elevator cabin in accordance with an embodiment of the present disclosure is shown. Process 300 may be employed to form an elevator cabin that is rigid, has additional support, and include features that may dampen and/or insulate vibrations of the elevator cabin during operation.

First, a number of supports are assembled to form a frame (block 302). For example, with reference to FIG. 1, a plurality of support elements may be secured to each other to form a frame for walls of a cabin and the support elements may be secured to a floor section and/or a ceiling section. With the frame constructed, at least one support member (e.g., support member 220 of FIG. 2) may be attached to one or more of the support elements of the frame (block 304). Finally, one or more wall panels may be attached to the support member to form the walls of the cabin (block 306). Those of skill in the art will appreciate that other or additional operations may be performed during the construction of the elevator cabin, and further that various steps may be performed simultaneously or in any desired order.

Advantageously, embodiments described herein provide a structurally rigid elevator cabin while simplifying the construction and manufacturing process. For example, by incorporating a structural member as described herein, a horizontal support and rigid element is incorporated in the exterior wall of the cabin. The horizontal aspect of the structural member may improve the vibra-acoustic behavior of the elevator cabin, and specifically may reduce the acoustic noise within the cabin that may be experienced by passengers.

Furthermore, advantageously, embodiments described herein may enable a reduced cabin wall thickness because the wall panels may be vertically shorter than other configurations. That is, the first wall panel (e.g., upper wall panel) and the second wall panel (e.g., lower wall panel) may be thinner than a wall panel that extends from the floor to the ceiling of the cabin because of the structural member located between the first wall panel and the second wall panel. The structural member adds rigidity and strength, thus enabling thinner wall panels, while at the same time improving the acoustic quality within the cabin.

Furthermore, advantageously, embodiments described herein may provide a handrail that is integrated and/or integral with the frame of the cabin, thus eliminating various steps and components employed to construct the cabin. Moreover, because the structural member described herein may be extruded and/or additively manufactured various configurations and/or geometries may be enabled. For example, an aesthetic handrail may be manufactured while also providing structural support and rigidity to the cabin. Moreover, various channels, grooves, and/or cavities may be implemented within and around the structural member to enable wiring, lighting, sound, airflow, etc. to be passed through and/or along the structural member.

Furthermore, advantageously, various embodiments described herein may be formed by extrusion and/or additive manufacturing, or other processes, and may be formed from metals, plastics, rubbers, composites, or other materials and/or combinations thereof. As such, in some configurations, the second portion and the intermediate portion may be formed of a first material, such as a metal, and the first portion may be formed from a plastic or composite. In some embodiments, as mentioned, fire resistant coatings may be applied to portions of the structural member. In some embodiments, a cover or liner may be attached over an outer surface of the structural member. In such embodiments, the cover or liner may be provided for aesthetic purposes, textual purposes, or for other reasons.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments.

For example, although a single shape or geometry of the structural member is shown, those of skill in the art will appreciate that any shape, geometry, size, and/or configuration may be employed for the structural member. Further, as shown in the drawings, the shape of the structural member in the horizontal direction does not need to be uniform. In some embodiments the structural member may span various vertical heights and/or may be curved. Thus, variations on the shape, look, design, etc. may be made to the structural member without departing from the scope of the present disclosure.

Accordingly, the present disclosure is not to be seen as limited by the foregoing description, but is only limited by the scope of the appended claims.

## Claims

1. A structural member (220) for an elevator cabin, the structural member comprising:
a body having:
a first portion (234) configured to be disposed on an interior side of an elevator cabin wall, wherein the interior side faces the elevator cabin;
a second portion (236) configured to be disposed on an exterior side of the elevator cabin wall, wherein the exterior side faces away from the elevator cabin; and
an intermediate portion (238) connecting the first portion to the second portion; and
a first support channel (230) formed between the first portion and the second portion and defined by a surface of the first portion, a surface of the second portion, and a surface of the intermediate portion, the first channel (230) configured to receive a first wall panel (222) of an elevator cabin wall and provide structural rigidity thereto; and
a second support channel (232) formed opposite the first support channel and located between the first portion and the second portion and defined by a surface of the first portion, a surface of the second portion, and a surface of the intermediate portion, the second support channel (232) configured to receive a second wall panel (224) of an elevator cabin wall and provide structural rigidity thereto,
**characterized in that** the first portion is configured as a handrail.

2. The structural member (220) of claim 1, further comprising at least one engagement feature (244) within at least one of the first and second support channels (230, 232), the at least one engagement feature configured to engage with the respective wall panel (222, 224) of the elevator cabin wall.

3. The structural member (220) of claim 2, wherein the at least one engagement feature (244) is configured to engage with the wall panel (222, 224) by an interference fit.

4. The structural member (220) of any of the preceding claims, wherein the second portion (236) is configured to fixedly attach to a frame (100) of the elevator cabin.

5. The structural member (220) of any of the preceding claims, wherein the first portion (234) defines a cavity (240) therein.

6. The structural member (220) of any of the preceding claims, wherein an external contour of the first portion (234) defines a groove (242).

7. The structural member (220) of any of the preceding claims, wherein the first portion (234), the second portion (236), and the intermediate portion (238) form a unitary body.

8. An elevator cabin comprising:
a frame (100); and
the structural member (220) of any of the preceding claims,
wherein the structural member is fixedly attached to a portion of the frame.

9. The elevator cabin of claim 8, further comprising a first wall panel (222) and a second wall panel (224), each wall panel engaged with the structural member (220).

10. A method of constructing an elevator cabin, the method comprising:
assembling a frame (100) of an elevator cabin, the frame comprising a plurality of support elements;
fixedly attaching a structural member (220) to at least one of the plurality of support elements, the structural member having:
a body including:
a first portion (234) configured to be disposed on an interior side of an elevator cabin wall, wherein the interior side faces the elevator cabin;
a second portion (236) configured to be disposed on an exterior side of the elevator cabin wall, wherein the exterior side faces away from the elevator cabin; and
an intermediate portion (238) connecting the first portion to the second portion; and
a first support channel formed between the first portion and the second portion and defined by a surface of the first portion, a surface of the second portion, and a surface of the intermediate portion, the first support channel (230) configured to receive a first wall panel (222) of an elevator cabin wall and provide structural rigidity thereto, and
a second support channel (232) formed opposite the first support channel and located between the first portion and the second portion and defined by a surface of the first portion, a surface of the second portion, and a surface of the intermediate portion, the second support channel (232) configured to receive a second wall panel (224) of an elevator cabin wall and provide structural rigidity thereto,
**characterized in that** the first portion is configured as a handrail, and wherein the method further comprises:
installing at least one wall panel to the structural member within the at least one support channel.

11. The method of claim 10, wherein the first portion (234) defines a cavity (240) therein, the method comprising installing at least one wire within the cavity of the first portion.

12. The method of any of claims 10-11, wherein the first portion (234) defines a channel (242), the method comprising installing at least one light within the channel of the first portion.

13. The method of any of claims 10-12, wherein installing the at least one wall panel (222, 224) comprises installing a first panel (222) on first side of the structural member (230) and installing a second panel (224) on a side opposite the first side.

## Patentansprüche

1. Strukturelement (220) für eine Aufzugskabine, wobei das Strukturelement Folgendes umfasst:
ein Gehäuse, das Folgendes aufweist:
einen ersten Teil (234), der so konfiguriert ist, dass er auf einer Innenseite einer Aufzugskabinenwand angeordnet wird, wobei die Innenseite zur Aufzugskabine gewandt ist;
einen zweiten Teil (236), der so konfiguriert ist, dass er auf einer Außenseite der Aufzugskabinenwand angeordnet wird, wobei die Außenseite von der Aufzugskabine abgewandt ist; und
einen Zwischenteil (238), der den ersten Teil mit dem zweiten Teil verbindet; und
einen ersten Stützkanal (230), der zwischen dem ersten Teil und dem zweiten Teil gebildet wird und durch eine Oberfläche des ersten Teils, eine Oberfläche des zweiten Teils und eine Oberfläche des Zwischenteils definiert wird, wobei der erste Kanal (230) so konfiguriert ist, dass er eine erste Wandtafel (222) einer Aufzugskabinenwand aufnimmt und dieser strukturelle Rigidität verleiht; und
einen zweiten Stützkanal (232), der gegenüber dem ersten Stützkanal gebildet wird und sich zwischen dem ersten Teil und dem zweiten Teil befindet und durch eine Oberfläche des ersten Teils, eine Oberfläche des zweiten Teils und eine Oberfläche des Zwischenteils definiert wird, wobei der zweite Stützkanal (232) so konfiguriert ist, dass er eine zweite Wandtafel (224) einer Aufzugskabinenwand aufnimmt und dieser strukturelle Rigidität verleiht,
**dadurch gekennzeichnet, dass** der erste Teil als ein Handlauf konfiguriert ist.

2. Strukturelement (220) nach Anspruch 1, das ferner mindestens ein Rastelement (244) innerhalb mindestens eines des ersten und zweiten Stützkanals (230, 232) umfasst, wobei das mindestens eine Rastelement so konfiguriert ist, dass es in die jeweilige Wandtafel (222, 224) der Aufzugskabinenwand einrastet.

3. Strukturelement (220) nach Anspruch 2, wobei das mindestens eine Rastelement (244) so konfiguriert ist, dass es durch eine Presspassung in die Wandtafel (222, 224) einrastet.

4. Strukturelement (220) nach einem der vorhergehenden Ansprüche, wobei der zweite Teil (236) so konfiguriert ist, dass er unbeweglich an einen Rahmen (100) der Aufzugskabine befestigt wird.

5. Strukturelement (220) nach einem der vorhergehenden Ansprüche, wobei der erste Teil (234) darin einen Hohlraum (240) definiert.

6. Strukturelement (220) nach einem der vorhergehenden Ansprüche, wobei ein externer Umriss des ersten Teils (234) eine Kerbe (242) definiert.

7. Strukturelement (220) nach einem der vorhergehenden Ansprüche, wobei der erste Teil (234), der zweite Teil (236) und der Zwischenteil (238) ein einheitliches Gehäuse bilden.

8. Aufzugskabine, die Folgendes umfasst:
einen Rahmen (100); und
das Strukturelement (220) nach einem der vorhergehenden Ansprüche, wobei das Strukturelement unbeweglich an einem Teil des Rahmens befestigt wird.

9. Aufzugskabine nach Anspruch 8, die ferner eine erste Wandtafel (222) und eine zweite Wandtafel (224) umfasst, wobei jede Wandtafel in das Strukturelement (220) einrastet.

10. Verfahren zum Herstellen einer Aufzugskabine, wobei das Verfahren Folgendes umfasst:
Zusammenbauen eines Rahmens (100) einer Aufzugskabine, wobei der Rahmen eine Vielzahl von Stützelementen umfasst;
unbewegliches Befestigen eines Strukturelements (220) an mindestens eines der Vielzahl von Stützelementen, wobei das Strukturelement Folgendes aufweist:
ein Gehäuse, das Folgendes beinhaltet:
einen ersten Teil (234), der so konfiguriert ist, dass er an einer Innenseite einer Aufzugskabinenwand angeordnet wird, wobei die Innenseite der Aufzugskabine zugewandt ist;
einen zweiten Teil (236), der so konfiguriert ist, dass er an einer Außenseite der Aufzugskabinenwand angeordnet wird, wobei die Außenseite von der Aufzugskabinenwand abgewandt ist; und
einen Zwischenteil (238), der den ersten Teil mit dem zweiten Teil verbindet; und
einen ersten Stützkanal, der zwischen dem ersten Teil und dem zweiten Teil gebildet wird und von einer Oberfläche des ersten Teils, einer Oberfläche des zweiten Teils und einer Oberfläche des Zwischenteils gebildet wird, wobei der erste Stützkanal (230) so konfiguriert ist, dass er eine erste Wandtafel (222) einer Aufzugskabine aufnimmt und dieser strukturelle Rigidität verleiht, und
einen zweiten Stützkanal (232), der gegenüber dem ersten Stützkanal gebildet wird und sich zwischen dem ersten Teil und dem zweiten Teil befindet und durch eine Oberfläche des ersten Teils und einer Oberfläche des zweiten Teils und eine Oberfläche des Zwischenteils definiert wird, wobei der zweite Stützkanal (232) so konfiguriert ist, dass er eine zweite Wandtafel (224) einer Aufzugskabinenwand aufnimmt und dieser strukturelle Rigidität verleiht,
**dadurch gekennzeichnet, dass** der erste Teil als Handlauf konfiguriert ist, und wobei das Verfahren ferner Folgendes umfasst:
Installieren mindestens einer Wandtafel am Strukturelement innerhalb des mindestens einen Stützkanals.

11. Verfahren nach Anspruch 10, wobei der erste Teil (234) einen Hohlraum (240) darin definiert, wobei das Verfahren das Installieren von mindestens einem Draht innerhalb des Hohlraums des ersten Teils umfasst.

12. Verfahren nach einem der Ansprüche 10-11, wobei der erste Teil (234) einen Kanal (242) definiert, wobei das Verfahren das Installieren von mindestens einem Licht innerhalb des Kanals des ersten Teils umfasst.

13. Verfahren nach einem der Ansprüche 10-12, wobei das Installieren der mindestens einen Wandtafel (222, 224) das Installieren einer ersten Tafel (222) an der ersten Seite des Strukturelements (230) und das Installieren einer zweiten Tafel (224) an einer Seite gegenüber der ersten Seite umfasst.

## Revendications

1. Élément structurel (220) pour une cabine d'ascenseur, l'élément structurel comprenant :
un corps ayant :
une première partie (234) configurée pour être disposée sur un côté intérieur d'une paroi de cabine d'ascenseur, dans lequel le côté intérieur fait face à la cabine d'ascenseur ;
une seconde partie (236) configurée pour être disposée sur un côté extérieur de la paroi de cabine d'ascenseur, dans lequel le côté extérieur est opposé à la cabine d'ascenseur ; et
une partie intermédiaire (238) reliant la première partie à la seconde partie ; et
un premier canal de support (230) formé entre la première partie et la seconde partie et défini par une surface de la première partie, une surface de la seconde partie, et une surface de la partie intermédiaire, le premier canal (230) étant configuré pour recevoir un premier panneau mural (222) d'une paroi de cabine d'ascenseur et lui conférer une rigidité structurelle ; et
un second canal de support (232) formé à l'opposé du premier canal de support et situé entre la première partie et la seconde partie, et défini par une surface de la première partie, une surface de la seconde partie, et une surface de la partie intermédiaire, le second canal de support (232) étant configuré pour recevoir un second panneau de paroi (224) d'une paroi de cabine d'ascenseur et pour lui conférer une rigidité structurelle,
**caractérisé en ce que** la première partie est configurée comme une main courante.

2. Élément structurel (220) selon la revendication 1, comprenant en outre au moins une caractéristique de mise en prise (244) à l'intérieur d'au moins l'un des premier et second canaux de support (230, 232), l'au moins une caractéristique de mise en prise étant configurée pour venir en prise avec le panneau mural (222, 224) respectif de la paroi de cabine d'ascenseur.

3. Élément structurel (220) selon la revendication 2, dans lequel l'au moins une caractéristique de mise en prise (244) est configurée pour venir en prise avec le panneau mural (222, 224) par un ajustement serré.

4. Élément structurel (220) selon l'une quelconque des revendications précédentes, dans lequel la seconde partie (236) est configurée pour se fixer de manière fixe à un cadre (100) de la cabine d'ascenseur.

5. Élément structurel (220) selon l'une quelconque des revendications précédentes, dans lequel la première partie (234) définit une cavité (240) à l'intérieur de celle-ci.

6. Élément structurel (220) selon l'une quelconque des revendications précédentes, dans lequel un contour externe de la première partie (234) définit une rainure (242).

7. Élément structurel (220) selon l'une quelconque des revendications précédentes, dans lequel la première partie (234), la seconde partie (236) et la partie intermédiaire (238) forment un corps unitaire.

8. Cabine d'ascenseur comprenant :
un cadre (100) ; et
l'élément structurel (220) selon l'une quelconque des revendications précédentes,
dans lequel l'élément structurel est fixé de manière fixe à une partie du cadre.

9. Cabine d'ascenseur selon la revendication 8, comprenant en outre un premier panneau mural (222) et un second panneau mural (224), chaque panneau mural étant en prise avec l'élément structurel (220).

10. Procédé de construction d'une cabine d'ascenseur, le procédé comprenant :
l'assemblage d'un châssis (100) d'une cabine d'ascenseur, le châssis comprenant une pluralité d'éléments de support ;
la fixation de manière fixe d'un élément structurel (220) à au moins l'un de la pluralité d'éléments de support, l'élément structurel ayant :
un corps, comportant :
une première partie (234) configurée pour être disposée sur un côté intérieur d'une paroi de cabine d'ascenseur, dans lequel le côté intérieur fait face à la cabine d'ascenseur ;
une seconde partie (236) configurée pour être disposée sur un côté extérieur de la paroi de cabine d'ascenseur, dans lequel le côté extérieur est opposé à la cabine d'ascenseur ; et
une partie intermédiaire (238) reliant la première partie à la seconde partie ; et
un premier canal de support formé entre la première partie et la seconde partie et défini par une surface de la première partie, une surface de la seconde partie, et une surface de la partie intermédiaire, le premier canal de support (230) étant configuré pour recevoir un premier panneau mural (222) d'une paroi de cabine d'ascenseur et lui conférer une rigidité structurelle, et
un second canal de support (232) formé à l'opposé du premier canal de support et situé entre la première partie et la seconde partie et défini par une surface de la première partie, une surface de la seconde partie, et une surface de la partie intermédiaire, le second canal de support (232) étant configuré pour recevoir un second panneau mural (224) d'une paroi de cabine d'ascenseur et lui conférer une rigidité structurelle,
**caractérisé en ce que**
la première partie est configurée comme une main courante, et dans lequel le procédé comprend en outre :
l'installation d'au moins un panneau mural sur l'élément structurel à l'intérieur de l'au moins un canal de support.

11. Procédé selon la revendication 10, dans lequel la première partie (234) définit une cavité (240) à l'intérieur de celle-ci, le procédé comprenant l'installation d'au moins un fil à l'intérieur de la cavité de la première partie.

12. Procédé selon l'une quelconque des revendications 10 et 11, dans lequel la première partie (234) définit un canal (242), le procédé comprenant l'installation d'au moins une lumière à l'intérieur du canal de la première partie.

13. Procédé selon l'une quelconque des revendications 10 à 12, dans lequel l'installation de l'au moins un panneau mural (222, 224) comprend l'installation d'un premier panneau (222) sur le premier côté de l'élément structurel (230) et l'installation d'un second panneau (224) sur un côté opposé au premier côté.
